# EUROPEAN PATENT APPLICATION

(11) **EP 3 498 552 A1**
(43) Date of publication of application: **19.06.2019**
(21) Application number: 18212352.1
(22) Date of filing: 13.12.2018
(51) Int. Cl.: B60T 13/74

(54) **APPARATUS AND ELECTRONIC PARKING BRAKE SYSTEM**

(30) Priority: 15.12.2017 US 201715843033
(71) Applicant: Continental Automotive Systems, Inc., Auburn Hills, MI 48326 (US)
(72) Inventor: MAXIMIUC, Fábio Niza, Lake Orion, MI, 48359 (US); SCHNEIDER, Gert-Rudolf, Troy, MI, 48098 (US)
(74) Representative: Isarpatent

(57) **Abstract**

An electronic parking brake (EPB) system having expanded functionality, which provides the driver of a vehicle the option to manually control the clamping force of the EPB as desired, while keeping existing EPB functionalities. The EPB system includes a hand lever assembly (12), and the driver is able to move the hand lever assembly to various positions. The position of the hand lever assembly corresponds to an equivalent parking brake clamping force request. A fully retracted lever corresponds to a complete release action of the parking brake, and a fully actuated lever corresponds to a complete clamping of the parking brake. Any position in between the fully retracted and fully actuated positions corresponds to a partial apply of the parking brake using a predefined ratio of force to lever position.

## Description

### FIELD OF THE INVENTION

The invention relates generally to an apparatus and an electronic parking brake system having various configurations to control vehicle dynamic.

### BACKGROUND OF THE INVENTION

Many current vehicles are equipped with an electronic parking brake (EPB). An EPB generally includes some type of brake unit having an electronic actuator in electrical communication with an electronic control unit (ECU), and there is also some type of switch which is selectively actuated by the driver of the vehicle for controlling the actuation of the EPB. The driver actuates the switch when desired such that a signal is sent to the ECU, and the ECU then sends a signal to the actuator to engage the brake unit, preventing the vehicle from moving.

Current EPB systems do not provide for control by the driver over the amount of clamping force generated by the brake unit. These current EPB systems typically have two configurations, where the brake unit is either fully engaged, or fully released. In some applications, such as off-road use and on-road racing, it would be beneficial for the driver to use the parking brake to adjust the vehicle dynamic. However, because of current EPB systems having limited configurations, there is limited benefit in using the EPB system to control vehicle dynamic.

### SUMMARY OF THE INVENTION

Accordingly, there exists a need for an EPB system which has expanded functionality, allowing the driver to use the EPB system to have greater control over the vehicle dynamic.

The present invention is an electronic parking brake (EPB) system having expanding functionality, which provides the driver of a vehicle the option to manually control the clamping force of the EPB as desired, while keeping existing EPB functionalities.

In one embodiment, the EPB system according to the invention includes a hand lever assembly, where the hand lever assembly includes both a lever and a transducer for detecting lever position, both of which are installed in the vehicle and connected to an electronic control unit (ECU), or a hydraulic electronic control unit (HECU), of the EPB system.

The driver is able to move the hand lever to various positions. The position of the lever corresponds to an equivalent parking brake clamping force request. A fully retracted lever corresponds to a complete release action of the parking brake, and a fully actuated lever corresponds to a complete clamping of the parking brake. Any position in between the fully retracted and fully actuated positions corresponds to a partial apply of the parking brake using a predefined ratio of force to lever position.

In one embodiment, the EPB system includes actuators, such as a motor-gear-unit. In one embodiment, the current is used as an indicator for detecting force, and the EPB system software activates the actuators of EPB system to generate the requested clamping force, for example, by adjusting the switch-off current of the motor in the motor-gear-unit. Any change in the position of the hand lever assembly corresponds to an adjustment of the clamping force. In one embodiment, if the lever is pulled further, a re-clamp action is generated with a new calculated switch-off current. A partial retraction of the hand lever generates a release action to install the new requested clamping force, according to the new position of the hand lever. Once the lever is fully retracted by the driver, the software of the EPB system fully configures the actuators such that no clamping force is applied.

Another feature of the present invention is the use of the EPB system for complete engagement and disengagement, of the braking unit, where a switch, located in the interior of the vehicle, is used for operation of the EPB system when there is no partial apply/release request.

One of the advantages of the present invention is that the EPB system of the present invention may be implemented into a vehicle without changing or developing a new brake caliper for the EPB system.

In one embodiment, the present invention is an electronic parking brake system, which includes a control device, such as a lever operable for being pivoted between a first position and a second position, and anywhere between the first position and second position, an electronic control unit in electrical communication with the lever, at least one actuator in electrical communication with the electronic control unit, and at least one disc, the actuator operable for selectively applying a force to the disc.

The electronic control unit sends a signal to the actuator to allow the rotation of the disc when the lever is in the first position, and the electronic control unit sends a signal to the actuator to prevent the rotation of the disc when the lever is in the second position.

In one embodiment, the lever is pivoted such that the ECU sends a signal to the actuator such that the actuator applies a partial force to the rotatable element, limiting the rotation of the rotatable element.

At least one caliper is connected to the actuator, and the actuator configures the caliper to apply force to the disc when the lever is moved away from the first position.

In one embodiment, the actuator is a motor-gear-unit, however it is within the scope of the invention that other types of actuators may be used, such as, but not limited to, a stand-alone DC motor, a brushless DC motor, a stepper motor, or the like.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a diagram of a vehicle having an electronic parking brake system, according to embodiments of the present invention;
Figure 2 is a diagram of an electronic parking brake system, according to embodiments of the present invention; and
Figure 3 is an enlarged view of the circled portion of Figure 2.

### DETAILED DESCRIPTION OF THE PREFERRED EMBODIMENTS

The following description of the preferred embodiment(s) is merely exemplary in nature and is in no way intended to limit the invention, its application, or uses.

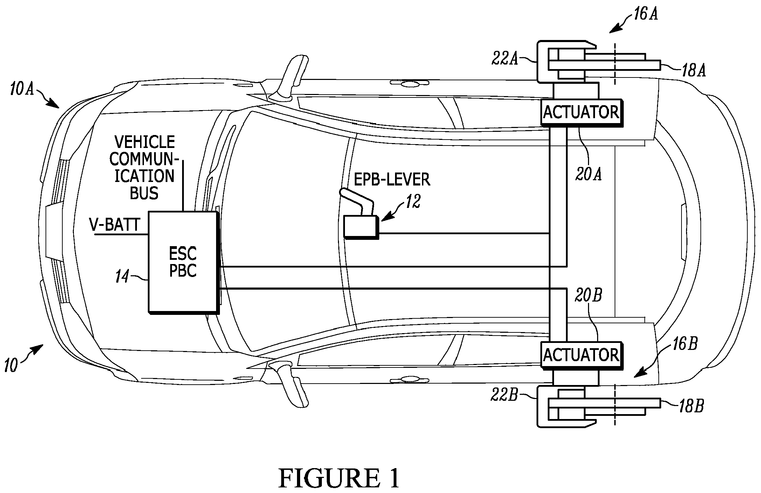

A diagram showing a vehicle 10A having an electronic parking brake (EPB) system according to the present invention is shown in Figure 1, generally at 10. Referring to the Figures generally, the system 10 includes a control device, shown generally at 12, which in this embodiment is a lever 12 in electrical communication with an electronic control unit (ECU) 14. The ECU 14 is in electrical communication with at least one brake unit, which in this embodiment is two brake units, shown generally at 16A,16B, where each brake unit 16A,16B is able to prevent the rotation of a corresponding rotatable element, which in this embodiment are two discs 18A,18B connected a corresponding wheel (not shown). Each brake unit 16A,16B includes an actuator 20A,20B, and each actuator 20A,20B is connected to and is able to actuate a corresponding caliper 22A,22B. Each caliper 22A,22B has two brake pads 24A,24B,24C,24D, and is able to apply force to the brake pads 24A,24B,24C,24D. Two of the brake pads 24A,24B are located on opposite sides of the first disc 18A, and the other two brake pads 24C,24D are located on opposite sides of the second disc 18B. The first actuator 20A is able to control the operation of the first caliper 22A such that the pads 24A,24B apply force to the first disc 18A, limiting or preventing rotation of the first disc 18A. The second actuator 20B is able to control the operation of the second caliper 22B such that the pads 24C,24D apply force to the second disc 18B, limiting or preventing rotation of the second disc 18B.

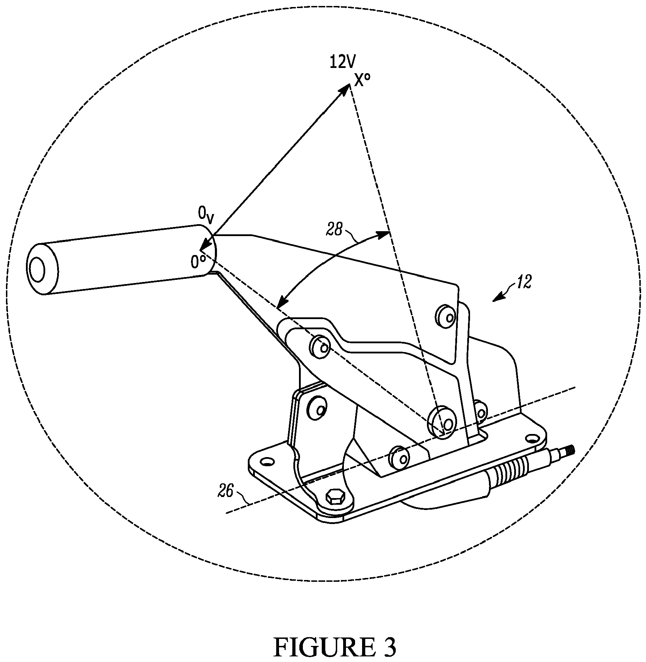

The lever 12 is able to be moved to various positions. More specifically, the lever 12 is able rotate about an axis 26 from a first position, shown in Figure 3, to a second position, where the lever 12 has rotated an angular distance indicated by an angle 28, also shown in Figure 3. The lever 12 also includes a transducer, which generates a voltage signal corresponding to the degree of which the lever 12 is pivoted about the axis 26, where the voltage signal from the transducer is sent to the ECU 14, and the ECU 14 sends a signal to each actuator 20A,20B representing the desired clamping force corresponding to the position of the lever 12, and therefore the corresponding clamping force is applied to each disc 18A,18B by each corresponding caliper 22A,22B. The actuators 20A,20B are able to maintain clamping force such that once the desired clamping force is achieved, the actuators 20A,20B are able to be deactivated (such that no current is applied to the actuators 20A,20B), while still maintaining the desired clamping force on the corresponding discs 18A,18B. The ECU 14 includes software such that the ECU 14 is programmed to command the actuators 20A,20B to generate a requested clamping force on the discs 18A,18B based on the position of the lever 12. In one embodiment, the actuators 20A,20B are motor-gear-units, each of which includes a DC motor connected to a gear box for torque amplification, where the current consumption by the DC motors is used as a force estimation (i.e., the current consumption by the DC motors corresponds to the force applied to the discs 18A,18B), and the switch-off current to the DC motors is adjusted to achieve the desired clamping force on the discs 18A,18B by the calipers 22A,22B. In this embodiment, the "switch-off" current is the current level of the DC motors once the desired clamping force is achieved. Once the desired clamping force is achieved, the DC motors are deactivated, and the level of current at the time the DC motors are switched off is the "switch off" current. Although the actuator 20A,20B has been described as a motor-gear-unit, it is within the scope of the invention that other types of actuators may be used, such as, but not limited to, a stand-alone DC motor (no gear box), a brushless DC motor, a stepper motor, or the like.

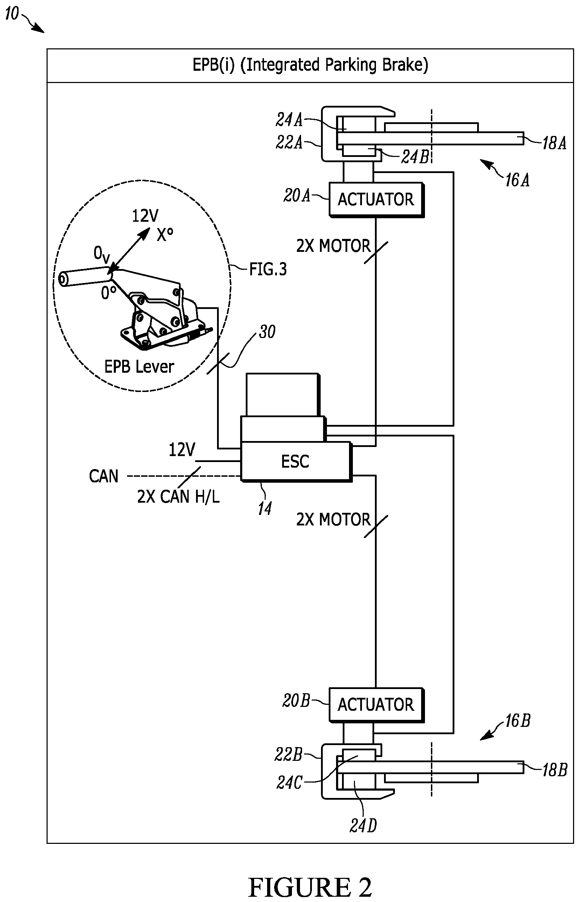

When the lever 12 is in the first position, shown in Figure 3, a voltage signal of zero volts is sent from the lever 12 to the ECU 14, such that no signal is sent from the ECU 14 to each actuator 20A,20B, and therefore no clamping force is generated by the actuators 20A,20B. When the lever 12 is in the second position, a voltage signal of twelve volts is sent from the lever 12 to the ECU 14, such that a signal corresponding to maximum clamping force is sent from the ECU 14 to each actuator 20A,20B, and the maximum clamping force is generated by the actuators 20A,20B. The lever 12 may also be placed anywhere between the first position and the second position such that a corresponding voltage signal anywhere between zero and twelve volts is sent from the lever 12 to the ECU 14, such that a signal representing the desired clamping force corresponding to the position of the lever 12 is sent from the ECU 14 to each actuator 20A,20B, and the desired clamping force is generated by the actuators 20A,20B. In the embodiment shown in Figures 1-3, there is a linear relationship between the position of the lever 12 and the clamping force applied to the discs 18A,18B by the actuators 20A,20B. However, it is within the scope of the invention that the relationship between the position of the lever 12 and the clamping force applied to the discs 18A,18B by the actuators 20A,20B may be non-linear, exponential, or have some other correlation such that the EPB system 10 of the present invention may be best suited for a specific application.

The EPB system 10 also includes a switch 30, which is also in electrical communication with the ECU 14. The switch 30 may also be used to actuate the brake units 16A,16B. The switch 30 has two configurations, in the first configuration, or "off position," the switch 30 is configured such that the ECU 14 does not send a signal to the actuators 20A,20B, and no force is applied to the discs 18A,18B. When the switch 30 is in the off position, the actuators 20A,20B configure the calipers 22A,22B to release the discs 18A,18B, such that the discs 18A,18B, and therefore the wheels, are allowed to rotate freely. In the second configuration, or "on position," the switch 30 is configured to send a signal to the ECU 14, and a signal corresponding to maximum clamping force is sent from the ECU 14 to each actuator 20A,20B, and the clamping force is generated by the actuators 20A,20B is maximized. When the switch 30 is in the on position, the clamping force applied to the discs 18A,18B by the actuators 20A,20B is maximized, and the discs 18A,18B, and therefore the wheels, are stationary, and prevented from rotating. The switch 30 may be used when the vehicle 10A is in a parked location, and it is desired to prevent the vehicle 10A from moving, such as when the vehicle 10A is parked on a hill.

In operation, the driver of the vehicle 10A may desire to change the vehicle dynamic. This may occur under different driving conditions, such as on-road racing, or when traveling off-road over various types of terrain. When the driver desires to change the vehicle dynamic, the driver may change the position of the lever 12, and rotate the lever 12 about the axis 26 from the first position to the second position, or anywhere between the first position and second position. When the lever 12 is in the first position, shown in Figure 3, a voltage signal of zero volts is sent from the lever 12 to the ECU 14, no signal is sent from the ECU 14 to the actuators 20A,20B, and there is no force applied to the discs 18A,18B, and the discs 18A,18B, and therefore the wheels, are allowed to rotate freely. When the lever 12 is in the second position, a voltage signal of twelve volts is sent from the lever 12 to the ECU 14, and a signal corresponding to maximum clamping force is sent to the actuators 20A,20B by the ECU 14, such that the clamping force applied to the discs 18A,18B by the actuators 20A,20B is maximized, and the discs 18A,18B, and therefore the wheels, are stationary, and prevented from rotating. The lever 12 may also be placed in any position between the first position and the second position, where a partial clamping force is applied to the discs 18A,18B, reducing the rotational speed of the discs 18A,18B, and therefore the wheels, allowing the driver to change the vehicle dynamic.

Any adjustment in the position of the lever 12 changes the corresponding clamping force applied to the discs 18A,18B by the calipers 22A,22B. When the lever 12 is located anywhere between the first position and the second position, and the lever 12 is pulled further, a "re-clamp action" is generated, having a new switch-off current. However, if the lever 12 is partially retracted, a "release action" is generated, to implement the new requested clamping force which corresponds to the new position of the lever 12.

While the control device has been described above using the embodiment of the lever 12, it is within the scope of the invention that the lever 12 may be replaced with other types of control devices, such as knobs and different types of levers. Furthermore, while it has also been described above that each rotating element is a disc, the rotating element may be a drum, or any other type of rotating element such that the EPB system 10 described above may be suitable for use with various types of braking units.

The description of the invention is merely exemplary in nature and, thus, variations that do not depart from the gist of the invention are intended to be within the scope of the invention. Such variations are not to be regarded as a departure from the spirit and scope of the invention.

## Claims

1. An apparatus, in particular a vehicle, the apparatus comprising:
an electronic parking brake system, the electronic parking brake system including:
a control device;
a control unit in electrical communication with the control device;
at least one actuator in electrical communication with the control unit; and
at least one rotatable element, the actuator operable for applying force to the at least one rotatable element;
wherein the control unit sends a signal to the actuator to control the rotation of the at least one rotatable element based on the configuration of the control device.

2. The apparatus of claim 1, wherein the control unit sends a signal to the at least one actuator such that no force is applied to the at least one rotatable element by the at least one actuator when the control device is placed in a first configuration, allowing the at least one rotatable element to rotate freely.

3. The apparatus according to any one of the preceding claims, wherein the control unit sends a signal to the at least one actuator when the control device is placed in a second configuration such that force is applied to the at least one rotatable element by the at least one actuator, preventing rotation of the at least one rotatable element.

4. The apparatus according to any one of the preceding claims, wherein the control device is placed in a configuration such that the ECU sends a signal to the at least one actuator such that the at least one actuator applies a partial force to the at least one rotatable element, limiting the rotation of the at least one rotatable element.

5. The apparatus according to any one of the preceding claims, further comprising at least one caliper connected to the at least one actuator, wherein actuator configures the at least one caliper to apply force to the at least one disc when the lever is in the second position, or positioned anywhere between the first position and the second position.

6. The apparatus according to any one of the preceding claims, the control device being one selected from the group consisting of a knob and a lever.

7. The apparatus according to any one of the preceding claims, the actuator further comprising a motor-gear-unit.

8. An electronic parking brake system, comprising:
a lever operable for being pivoted between a first position and a second position, and anywhere between the first position and second position;
an electronic control unit in electrical communication with the lever;
at least one actuator in electrical communication with the electronic control unit;
at least one disc, the actuator operable for selectively applying a force to the at least one disc;
wherein the electronic control unit sends a signal to the actuator to allow the rotation of the at least one disc when the lever is in the first position, and the electronic control unit sends a signal to the actuator to prevent the rotation of the at least one disc when the lever is in the second position.

9. The electronic parking brake system of claim 8, wherein the lever is pivoted such that the ECU sends a signal to the at least one actuator such that the at least one actuator applies a partial force to the at least one rotatable element, limiting the rotation of the at least one rotatable element.

10. The electronic parking brake system of claim 8 or 9, further comprising at least one caliper connected to the at least one actuator, wherein actuator configures the at least one caliper to apply force to the at least one disc when the lever is moved away from the first position.

11. The electronic parking brake system according to any one of the claims 8 to 10, the actuator further comprising a motor-gear-unit.
